# EUROPEAN PATENT APPLICATION

(11) **EP 3 525 154 A1**
(43) Date of publication of application: **14.08.2019**
(21) Application number: 19156218.0
(22) Date of filing: 08.02.2019
(51) Int. Cl.: G06Q 30/02

(54) **A CUSTOMER LOYALTY PROGRAMME IN RESPECT OF A RETAILER, AND A METHOD OF FACILITATING A CUSTOMER LOYALTY PROGRAMME FOR SAID RETAILER**

(30) Priority: 08.02.2018 ZA 201800813
(71) Applicant: Pedersen, Thor, Cape Town 8000 (ZA)
(72) Inventor: Pedersen, Thor, Cape Town 8000 (ZA)
(74) Representative: Sweetinburgh, Mark Roger

(57) **Abstract**

Described herein is a customer loyalty programme in respect of a retailer, the programme including a means of enabling a customer to reserve a fixed price in respect of a predetermined number of products, for future shopping opportunities, upon said customer purchasing one or more of said products; and a means of facilitating a payment from said customer for said future price reservation. Also described is method of facilitating a customer loyalty programme for a retailer, said method including enabling a customer to reserve a fixed price in respect of a predetermined number of products, for future shopping opportunities, upon said customer purchasing one or more of said products; and facilitating receipt of a payment from said customer for said future price reservation.

## Description

### FIELD OF THE INVENTION

The present invention relates to a customer loyalty programme in respect of a retailer, and a method of facilitating a customer loyalty programme for said retailer.

### BACKGROUND TO THE INVENTION

Loyalty programs are structured marketing strategies designed by merchants to encourage customers to continue to shop at or use the services of businesses associated with each program. These programs exist covering most types of commerce, each one having varying features and rewards-schemes.

In marketing generally and in retailing more specifically, a loyalty card, rewards card, points card, advantage card, or club card is a plastic or paper card, visually similar to a credit card, debit card, or digital card that identifies the card holder as a participant in a loyalty program. Loyalty cards (both physical and digital) relate to the loyalty business-model.

In the United Kingdom such a card is typically called a "loyalty card", in Canada a "rewards card" or a "points card", in the United States of America a "discount card", a "club card" or a "rewards card" and in Australia a "customer card" or "brand-name-in-question" card, for example: a "Coles Card". Cards typically have a barcode, magstripe or Radio-Frequency Identification (RFID) chip that can be easily scanned, although some are chip cards or proximity cards. Small keyring cards (also known as keytags) which serve as key fobs bring convenience in carrying and ease of access.

By presenting such a card, purchasers typically earn the right either to a discount on the current purchase, or to an allotment of points that they can use for future purchases. Hence the card is the visible means of implementing a type of what economists call a two-part tariff.

Application forms for cards usually entail agreements by the store concerning customer privacy, typically non-disclosure (by the store) of non-aggregate data about customers. The store uses aggregate data internally (and sometimes externally) as part of its marketing research. Over time the data can reveal, for example, a given customer's favorite brand of beer, or whether he or she is a vegetarian.

Where a customer has provided sufficient identifying information, the loyalty card may also be used to access such information to expedite verification during receipt of cheques or dispensing medical prescription preparations, or for other membership privileges (e.g. access to a club lounge in airports, using a frequent-flyer card).

One can regard loyalty programs as a form of centralized virtual currency, one with unidirectional cash flow, since reward points can be exchanged into a good or service but not into cash.

B2B (business-to-business) loyalty programs reward businesses for repeat purchases of goods and services from suppliers.

Some companies complain that conventional loyalty programs discount goods to people who are buying their goods anyway, and the expense of participating in these programs rarely generates a good return on the investment. Some other critics consider the discounted prices and rewards bribes to manipulate customer loyalty and purchasing decisions, or in the case of infrequent spenders, a means of subsidizing them.

On the other hand, a 2015 study claimed that most of the existing supermarket loyalty cards do not offer any real value to their customers. In fact, commercial use of customers' personal data collected as part of loyalty programmes has the potential for abuse; it is highly likely that consumer purchases are tracked and used for marketing research to increase the efficiency of marketing and advertising, which oftentimes is one of the purposes of the loyalty card. For some customers, participating in a loyalty program (even with a fake or anonymous card) funds activities that violate privacy. There has also been concern expressed regarding RFID technology being introduced to loyalty cards.

It will be appreciated that conventional reward programmes leave much to be desired. In particular, a clear benefit for the customer and the company in question is not discernable.

### OBJECT OF THE INVENTION

It is an object of the invention to provide a customer loyalty programme in respect of a retailer, and a method of facilitating a customer loyalty programme for said retailer which provides the advantages and addresses some of the issues and deficiencies described above.

### SUMMARY OF THE INVENTION

According to a first aspect of the invention, there is provided a customer loyalty programme in respect of a retailer, the programme including:
a means of enabling a customer to reserve a fixed price in respect of a predetermined number products, for future shopping opportunities, upon said customer purchasing one or more of said products; and
a means of facilitating a payment from said customer for said future price reservation.

In an embodiment of the invention, an amount of said payment for said future price reservation is determined by said retailer.

In an embodiment of the invention, said system includes a loyalty card uniquely associated with said customer.

In this embodiment, said one or more future price reservations is attributed to said customer's loyalty card.

In this embodiment, said system includes a means of retrieving said one or more future price reservations through a swiping of said loyalty card.

In an alternative embodiment of the invention, said system includes a unique code, said code being operable to be scanned by a customer using a mobile application.

In this embodiment, said means of enabling a customer to reserve a fixed price includes said customer scanning said unique code.

In an embodiment of the invention, said system includes a means of de-activating or expiring said future price reservation after a predetermined amount of time.

In this embodiment, said future price reservation includes an expiry date.

In this embodiment of the invention, said expiry date is determined by said retailer.

In an embodiment of the invention, said system includes a means of converting said future price reservation to a store credit.

In this embodiment of the invention, said system includes a means of converting said future price reservation to store credit after said expiry date.

In this embodiment, said converted store credit is loaded onto a customer's loyalty card after said expiry date.

In an embodiment of the invention, said system includes a means of communicating with said customer following said customer's purchase of said future price reservation. In this embodiment, contact information of said customer is obtained from said customer's loyalty card subscription.

According to a second aspect of the invention, there is provided a method of facilitating a customer loyalty programme for a retailer, said method including:
enabling a customer to reserve a fixed price in respect of a predetermined number of products, for future shopping opportunities, upon said customer purchasing one or more of said products; and
facilitating receipt of a payment from said customer for said future price reservation.

In an embodiment of the invention, said method includes issuing said customer with a loyalty card, wherein said loyalty card is uniquely associated with said customer.

In this embodiment, said method includes attributing one or more future price reservations to said customer's loyalty card.

In this embodiment, said method includes retrieving said one or more future price reservations through a swiping of said loyalty card.

In an embodiment of the invention, said method includes de-activating or expiring said future price reservation after a predetermined amount of time.

In this embodiment, said future price reservation includes an expiry date.

In an embodiment of the invention, said method includes a means of converting said future price reservation to a store credit.

In an embodiment of the invention, said method includes communicating with said customer following said customer's purchase of said future price reservation. In this embodiment, contact information of said customer is obtained from said customer's loyalty card subscription.

### BRIEF DESCRIPTION OF THE DRAWINGS

The present invention will now be described, by way of example only, with reference to the accompanying drawings, in which:
- Figure 1: is schematic diagram of a customer loyalty programme, in accordance with an embodiment of the invention;
- Figure 2: shows a computer within which a set of instructions, for causing the computer to perform any one or more of the methodologies described herein, may be executed; and
- Figure 3: is a schematic diagram of a method of facilitating a customer loyalty programme, in accordance with an embodiment of the invention.

### DESCRIPTION OF PREFERRED EMBODIMENT

The following description of the invention is provided as an enabling teaching of the invention. Those skilled in the relevant art will recognise that many changes can be made to the embodiment described, while still attaining the beneficial results of the present invention. It will also be apparent that some of the desired benefits of the present invention can be attained by selecting some of the features of the present invention without utilising other features. Accordingly, those skilled in the art will recognise that modifications and adaptations to the present invention are possible and can even be desirable in certain circumstances and are a part of the present invention. Thus, the following description is provided as illustrative of the principles of the present invention and not a limitation thereof.

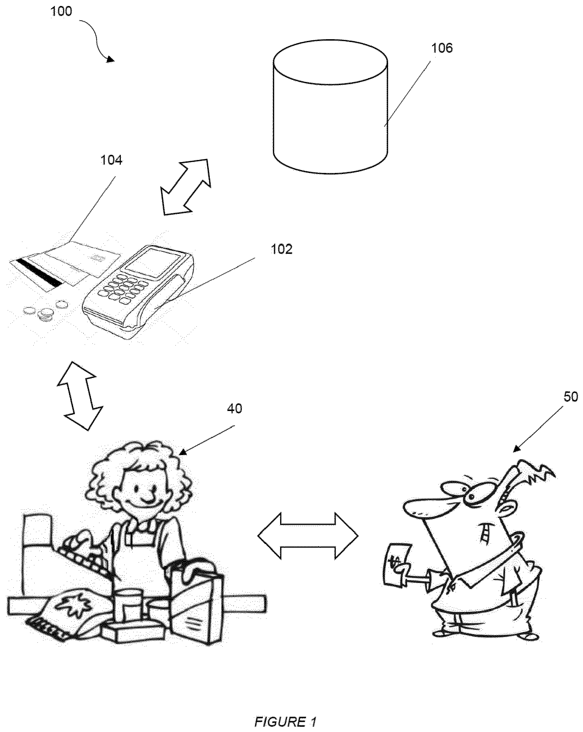

In Figure 1, a customer loyalty programme, is generally described with reference to numeral 100.

The programme 100 includes a transaction processing entity, in this example embodiment of a retail environment, the transaction processing entity is provided in the example form of a Point of Sale (POS) device 102 operated by a cashier 40. In alternative embodiments of the invention, the transaction processing entity may be provided in the example form of an e-commerce website. In an additional alternative embodiment, said transaction processing entity may be provided in the form of a unique identifying code which can be scanned by a customer using an application on their mobile phone.

The transaction processing entity 102 includes a means of receiving a reservation fee from the customer, as determined by the retailer.

In this example embodiment, the programme 100 further includes a loyalty subscription such as a loyalty card 104 which has been issued to a customer 50 and is uniquely attributable to the customer 50. It will be appreciated that in the context of the online transaction scenario described above, the loyalty card 104 is provided in the example form of a loyalty membership or subscription number.

The programme 100 further includes a database 106 or cloud-based data storage unit, where information related to the customer 50 is stored. The database 106 will further contain data related to products purchased by the customer 50 and any future price reservation that the customer 50 has purchased.

The programme 100 further includes data related to predetermined expiry date of the future price reservation, as determined by the retailer.

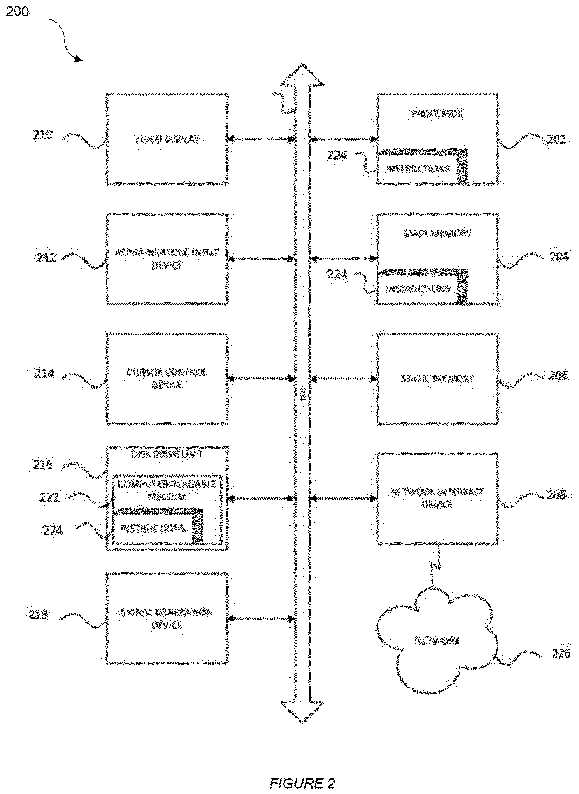

In Figure 2, a computer within which a set of instructions, for causing the computer to perform any one or more of the methodologies described herein, may be executed. In accordance with embodiments of the invention, the computer is generally described with reference to numeral 200.

In a networked deployment, the computer 200 may operate in the capacity of a server or a client machine in server-client network environment, or as a peer machine in a peer-to-peer (or distributed) network environment. The computer 200 may be a personal computer (PC), a tablet PC, a set-top box (STB), a Personal Digital Assistant (PDA), a cellular telephone, a web appliance, a network router, switch or bridge, or any computer 200 capable of executing a set of instructions (sequential or otherwise) that specify actions to be taken by that computer 200. Further, while only a single computer 200 is illustrated, the term "computer" shall also be taken to include any collection of computers that individually or jointly execute a set (or multiple sets) of instructions to perform any one or more of the methodologies discussed herein.

The example computer system 200 includes a processor 202 (e.g., a central processing unit (CPU), a graphics processing unit (GPU) or both, a main memory 204 and a static memory 606, which communicate with each other via a bus 608. The computer 200 may further include a video display unit 210 (e.g., a liquid crystal display (LCD)). The computer 600 also includes an alphanumeric input device 212 (e.g., a keyboard), a user interface (Ul) navigation device 214 (e.g., a mouse), a disk drive unit 216, a signal generation device 218 (e.g., a speaker) and a network interface device 220.

The disk drive unit 216 includes a computer-readable medium 222 on which is stored one or more sets of instructions and data structures (e.g., software 224) embodying or utilized by any one or more of the methodologies or functions described herein. The software 224 may also reside, completely or at least partially, within the main memory 204 and/or within the processor 602 during execution thereof by the computer system 200, the main memory 604 and the processor 602 also constituting computer-readable media.

The software 224 may further be transmitted or received over a network 226 via the network interface device 220 utilizing any one of a number of well-known transfer protocols (e.g., HTTP, FTP).

While the computer-readable medium 222 is shown in an example embodiment to be a single medium, the term "computer-readable medium" should be taken to include a single medium or multiple media (e.g., a centralized or distributed database, and/or associated caches and servers) that store the one or more sets of instructions. The term "computer-readable medium" shall also be taken to include any medium that is capable of storing, encoding or carrying a set of instructions for execution by the computer 200 and that cause the computer 200 to perform any one or more of the methodologies of the present embodiments, or that is capable of storing, encoding or carrying data structures utilized by or associated with such a set of instructions. The term "computer-readable medium" shall accordingly be taken to include, but not be limited to, solid-state memories and optical and magnetic media.

The system 100 and/or database 106 may include at least some of the components of the computer 200.

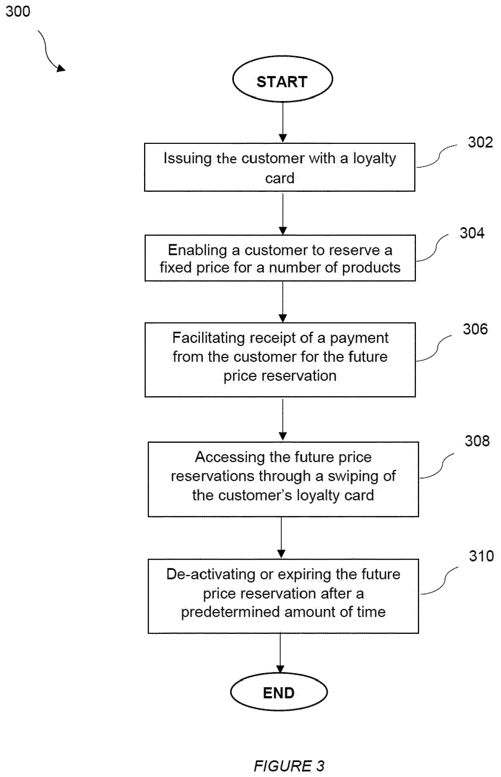

In Figure 3, a method of facilitating a customer loyalty programme, in accordance with embodiments of the invention, is generally described with reference to numeral 300.

At block 302, the method 300 includes the step of issuing the customer with a loyalty card, wherein said loyalty card is uniquely associated with said customer.

The method 300 includes, at block 304, the step of enabling a customer to reserve a fixed price for a number of products, for future shopping opportunities.

At block 306, the method 300 includes the step of facilitating receipt of a payment from the customer for the future price reservation.

At block 308, the method 300 includes the step of accessing the future price reservations of a customer through a swiping of the customer's loyalty card.

At block 310, the method 300 includes the step of de-activating or expiring the future price reservation after a predetermined amount of time.

The invention includes the following numbered embodiments:-
1. A customer loyalty programme in respect of a retailer, the programme including:
   a means of enabling a customer to reserve a fixed price in respect of a predetermined number of products, for future shopping opportunities, upon said customer purchasing one or more of said products; and
   a means of facilitating a payment from said customer for said future price reservation.
2. A system according to any of the preceding embodiments, wherein an amount of said payment for said future price reservation is determined by said retailer.
3. A system according to any of the preceding embodiments, wherein said system includes a loyalty card uniquely associated with said customer.
4. A system according to any of the preceding embodiments, wherein said one or more future price reservations is attributed to said customer's loyalty card.
5. A system according to any of the preceding embodiments, wherein said system includes a means of retrieving said one or more future price reservations through a swiping of said loyalty card.
6. A system according to any of the preceding embodiments, wherein said system includes a unique code, said code being operable to be scanned by a customer using a mobile application.
7. A system according to any of the preceding embodiments, wherein said means of enabling a customer to reserve a fixed price includes said customer scanning said unique code.
8. A system according to any of the preceding embodiments, wherein said system includes a means of de-activating or expiring said future price reservation after a predetermined amount of time.
9. A system according to any of the preceding embodiments, wherein said future price reservation includes an expiry date.
10. A system according to any of the preceding embodiments, wherein said expiry date is determined by said retailer.
11. A system according to any of the preceding embodiments, wherein said system includes a means of converting said future price reservation to a store credit.
12. A system according to any of the preceding embodiments, wherein said system includes a means of converting said future price reservation to store credit after said expiry date.
13. A system according to any of the preceding embodiments, wherein said converted store credit is loaded onto a customer's loyalty card after said expiry date.
14. A system according to any of the preceding embodiments, wherein said system includes a means of communicating with said customer following said customer's purchase of said future price reservation.
15. A system according to any of the preceding embodiments, wherein contact information of said customer is obtained from said customer's loyalty card subscription.
16. A method of facilitating a customer loyalty programme for a retailer, said method including:
   enabling a customer to reserve a fixed price in respect of a predetermined number of products, for future shopping opportunities, upon said customer purchasing one or more of said products; and
   facilitating receipt of a payment from said customer for said future price reservation.
17. A system according to embodiment 16, wherein said method includes issuing said customer with a loyalty card, wherein said loyalty card is uniquely associated with said customer.
18. A system according to any of embodiments 16 or 17, wherein said method includes attributing one or more future price reservations to said customer's loyalty card.
19. A system according to any of embodiments 16 to 18, wherein said method includes retrieving said one or more future price reservations through a swiping of said loyalty card.
20. A system according to any of embodiments 16 to 19, wherein said method includes de-activating or expiring said future price reservation after a predetermined amount of time.
21. A system according to any of embodiments 16 to 20, wherein said future price reservation includes an expiry date.
22. A system according to any of embodiments 16 to 21, wherein said method includes a means of converting said future price reservation to a store credit.
23. A system according to any of embodiments 16 to 22, wherein method includes communicating with said customer following said customer's purchase of said future price reservation.
24. A system according to embodiment 23, wherein contact information of said customer is obtained from said customer's loyalty card subscription.

## Claims

1. A customer loyalty programme in respect of a retailer, the programme including:
a means of enabling a customer to reserve a fixed price in respect of a predetermined number of products, for future shopping opportunities, upon said customer purchasing one or more of said products; and
a means of facilitating a payment from said customer for said future price reservation.

2. A system as claimed in claim 1, wherein an amount of said payment for said future price reservation is determined by said retailer.

3. A system as claimed in any of the preceding claims, wherein said system includes a loyalty card uniquely associated with said customer.

4. A system as claimed in any of the preceding claims, wherein said one or more future price reservations is attributed to said customer's loyalty card.

5. A system as claimed in any of the preceding claims, wherein (i) said system includes a means of retrieving said one or more future price reservations through a swiping of said loyalty card, and/or (ii) said system includes a unique code, said code being operable to be scanned by a customer using a mobile application, optionally wherein said means of enabling a customer to reserve a fixed price includes said customer scanning said unique code, and/or (iii) said system includes a means of de-activating or expiring said future price reservation after a predetermined amount of time.

6. A system as claimed in any of the preceding claims, wherein (i) said future price reservation includes an expiry date, optionally wherein said expiry date is determined by said retailer, and/or (ii) said system includes a means of converting said future price reservation to a store credit, and/or (iii) said system includes a means of converting said future price reservation to store credit after said expiry date.

7. A system as claimed in any of the preceding claims, wherein said converted store credit is loaded onto a customer's loyalty card after said expiry date.

8. A system as claimed in any of the preceding claims, wherein said system includes a means of communicating with said customer following said customer's purchase of said future price reservation.

9. A system as claimed in any of the preceding claims, wherein contact information of said customer is obtained from said customer's loyalty card subscription.

10. A method of facilitating a customer loyalty programme for a retailer, said method including:
enabling a customer to reserve a fixed price in respect of a predetermined number of products, for future shopping opportunities, upon said customer purchasing one or more of said products; and
facilitating receipt of a payment from said customer for said future price reservation.

11. A method as claimed in claim 10, wherein said method includes issuing said customer with a loyalty card, wherein said loyalty card is uniquely associated with said customer, and/or wherein said method includes attributing one or more future price reservations to said customer's loyalty card, and/or wherein said method includes retrieving said one or more future price reservations through a swiping of said loyalty card.

12. A method as claimed in any of claims 10 or 11, wherein said method includes de-activating or expiring said future price reservation after a predetermined amount of time, and/or wherein said future price reservation includes an expiry date.

13. A method as claimed in any of claims 10 to 12, wherein said method includes a means of converting said future price reservation to a store credit.

14. A method as claimed in any of claims 10 to 13, wherein method includes communicating with said customer following said customer's purchase of said future price reservation.

15. A method as claimed in claim 14, wherein contact information of said customer is obtained from said customer's loyalty card subscription.
